# EUROPÄISCHE PATENTSCHRIFT

(11) **EP 0 725 073 B1**
(45) Veröffentlichungstag und Bekanntmachung des Hinweises auf die Patenterteilung: **24.05.2000**
(21) Anmeldenummer: 96101311.7
(22) Anmeldetag: 31.01.1996
(51) Int. Cl.: C07F 9/50

(54) **Reduktion von Triphenylphosphindichlorid**
Reduction of triphenylphosphine dichloride
Réduction du dichlorure de triphénylphosphine

(30) Priorität: 06.02.1995 DE 19503826
(43) Veröffentlichungstag der Anmeldung: 07.08.1996
(73) Patentinhaber: BASF AKTIENGESELLSCHAFT, 67056 Ludwigshafen (DE)
(72) Erfinder: Hermeling, Dieter, Dr., D-67459 Böhl-Iggelheim (DE); Siegel, Hardo, Dr., D-67346 Speyer (DE); Hugo, Randolf, D-67246 Dirmstein (DE); Rotermund, Gerhard W., Dr., D-68165 Mannheim (DE)

(56) Entgegenhaltungen:
- EP-A- 0 638 580
- DE-B- 1 192 205
- GB-A- 1 029 924

## Beschreibung

### Beschreibung für folgende Vertragsstaaten : CH, LI, DE, ES, FR, GB, IT, NL

Die vorliegende Erfindung betrifft ein verbessertes Verfahren zur Herstellung von Triphenylphosphin (TPP) durch Reduktion von Triphenylphosphindichlorid (TPPCl₂) mit Aluminium.

TPP dient, wie allgemein bekannt ist, im technischen Maßstab nach der sogenannten Wittigschen Ylid-Synthese zur Herstellung olefinischer Verbindungen wie Vitamin A, wobei das in stöchiometrischer Menge eingesetzte TPP zum Triphenylphosphinoxid (TPPO) oxidiert wird.

Da für das TPPO nur wenige Anwendungen bekannt sind und da es als äußerst stabile Substanz nur schwer entsorgt werden kann, ist man bestrebt, es wieder in das TPP zu überführen.

Bei der aus der DE-B 11 92 205 (Spalte 1, Zeilen 1 bis 4) und der GB-B 10 29 924 (Seite 2, Zeilen 104 bis 110) bekannten Reaktionsfolge wird das TPPO mit Phosgen zu TPPCl₂ umgesetzt, welches anschließend mit Aluminium zum TPP reduziert wird.

Für die Reduktion des TPPCl₂ zum TPP ist es allgemein üblich, sehr feinteiliges Aluminiumpulver einzusetzen. So wird beispielsweise in der DE 12 59 883 empfohlen, Aluminiumpulver mit einer durchschnittlichen Teilchengröße von 50 bis 75 µm einzusetzen (Spalte 4, Zeilen 26 bis 31).

Auch in der GB-B 10 29 924 wird ein sehr feinteiliges Aluminiumpulver eingesetzt, da das Aluminiumpulver zuvor durch Klassierung mit einem sehr feinen Maschensieb erhalten wird (Seite 3, Zeilen 3 bis 8). Die hier zitierte "mesh sieve" von 200 bis 300 entspricht einer Teilchengröße von 76 bis 53 µm.

Die Bereitstellung von sehr feinteiligem Aluminiumpulver gestaltet sich jedoch relativ aufwendig und kostenintensiv. Weiterhin werden bei den beschriebenen Verfahren relativ langsame Umsetzungsgeschwindigkeiten erzielt.

Der Erfindung lag daher die Aufgabe zugrunde, den o.g. Nachteilen abzuhelfen und die Umsetzung von TPPCl₂ zu TPP wirtschaftlicher und einfacher zu gestalten als bisher.

Demgemäß wurde ein Verfahren zur Herstellung von TPP durch Reduktion von TPPCl₂ mit Aluminium gefunden, welches dadurch gekennzeichnet ist, daß man Aluminiumteilchen mit einem Teilchendurchmesser von 100 bis 2000 µm einsetzt, wobei Aluminiumteilchen mit einem Teilchendurchmesser von 200 bis 400 µm ausgeschlossen sind.

Die Größe der Aluminiumteilchen spielt bei der Umsetzung von TPPCl₂ zu TPP eine entscheidende Rolle. Hierbei wurde überraschenderweise festgestellt, daß man bei Einsatz von Aluminiumteilchen mit einem Teilchendurchmesser von 100 bis 2000 µm, bevorzugt 100 bis 1000 µm, besonders bevorzugt 200 bis 600 µm, höhere Raum-Zeit-Ausbeuten erzielen kann als mit feinteiligem Aluminiumpulver von etwa 50 bis 75 µm.

Der Teilchendurchmesser entspricht bei kugelförmigen Teilchen dem Kugeldurchmesser. Bei hiervon abweichenden Formen gestaltet sich die Angabe der exakten Teilchengröße zwar etwas diffus, allerdings lassen sich auch in diesen Fällen Aluminiumteilchen der erfindungsgemäßen Teilchengröße durch Siebung bereitstellen.

Hierzu kann man in bekannter Weise durch Verwendung zweier Siebe in den Maschenweiten von 100 bzw. 2000 µm ein Teilchenkollektiv auswählen, welches die anspruchsgemäßen Erfordernisse erfüllt.

Falls man engere Teilchenkollektive auswählen will, kann man dies durch entsprechende Auswahl der Siebe erzielen.

Die Siebe sind handelsüblich erhältlich und die Maschenweite ist in der DIN-Norm 4188 festgelegt.

Die Reaktivität der Aluminiumteilchen durchläuft in dem erfindungsgemäßen Größenbereich ein Maximum an Reaktivität, d.h. mit weiter zunehmender Teilchengröße wird ebenfalls eine Abnahme der Reaktivität beobachtet.

Wesentlich für die erfindungsgemäße Steigerung der Raum-Zeit-Ausbeute ist die Größe der Aluminiumteilchen. Neben den besonders gut geeigneten kugelförmigen Aluminiumteilchen sind auch andere Formen wie Nadeln, Späne oder auch unregelmäßige Formen gut geeignet, sofern sie die erfindungsgemäße Teilchengröße besitzen.

Die Umsetzung von TPPCl₂ mit Aluminium zu TPP und Aluminiumchlorid kann sowohl kontinuierlich als auch diskontinuierlich durchgeführt werden.

Hierzu wird dem in einem inerten Lösungsmittel wie Toluol, Xylol, Chlorbenzol, Dichlorbenzol, Benzonitril, Acetonitril, Propionitril oder Cyclohexan gelösten TPPCl₂ das Reduktionsmittel Aluminium mit der erfindungsgemäßen Teilchengröße zugegeben.

Die Reaktionstemperatur erstreckt sich üblicherweise von etwa 20 bis 200°C, bevorzugt 60 bis 150°C, besonders bevorzugt 60 bis 120°C.

Die Reduktion kann sowohl bei Normaldruck als auch bei vermindertem oder erhöhtem Druck durchgeführt werden. Vorzugsweise arbeitet man bei Normaldruck.

Das Aluminium kann in stöchiometrischen Mengen eingesetzt werden. Da ein Überschuß die Reaktionsgeschwindigkeit erhöht, wird das Aluminium vorzugsweise in einem 2 bis 10 molaren Überschuß eingesetzt. Nicht umgesetztes Aluminium wird vorzugsweise nach Abtrennen des Reaktionsgemisches in die Reduktion zurückgeführt.

Als Reaktoren eignen sich die bekannten Bauformen wie beispielsweise Rührreaktoren.

Insbesondere bei einer kontinuierlichen Reduktion in einem Rührreaktor ist neben der Teilchengröße auch das Korngrößenverteilungsspektrum von Bedeutung. Die Differenz zwischen den größten und den kleinsten Aluminiumteilchen (Siebober- bzw. Siebuntergrenze) des eingesetzten Aluminiums sollte nicht mehr als 800 µm betragen. Vorzugsweise ist die Differenz geringer als 500 µm und ganz besonders bevorzugt ist eine Differenz von nicht mehr als 200 µm. Die angegebenen Partikelgrößen und Bandbreiten beziehen sich auf Standardsiebfraktionen mit den herstellungsbedingten Toleranzen bezüglich des Ober- bzw. Unterkornanteils.

Durch dieses Korngrößenverteilungsspektrum kann man die Aluminiumteilchen im Rührreaktor sehr homogen verteilen, wodurch die Reaktionsführung weiter begünstigt wird.

Nach beendeter Umsetzung wird die Reaktionslösung von dem ggf. überschüssigen Aluminium abgetrennt und anschließend in für metallorganische Reaktionen üblicher Weise vorzugsweise durch Hydrolyse und Destillation aufgearbeitet.

Das erfindungsgemäße Verfahren bietet hohe Ausbeuten an TPP bei hoher Raum-Zeit-Geschwindigkeit. Weiterhin konnte das Verfahren einfacher und wirtschaftlicher gestaltet werden.

### Beispiel 1 bis 6

Der Reaktionsverlauf wurde kinetisch verfolgt. In einem mit Stickstoff inertisierten Gefäß mit Magnetrührer und Rückflußkühler wurden 3 g Aluminium vorgelegt. Das Gefäß wurde in einem Ölbad auf 110°C erhitzt. Anschließend wurden 10 ml Triphenylphosphindichlorid gelöst in Chlorbenzol (Gehalt: 13 Gew.-%) auf einmal zugegeben. Die Reaktion sprang unter heftigem Schäumen an. Nach einer Reaktionszeit von 5 bzw. 10 Minuten wurde das Ölbad entfernt und das Reaktionsgemisch mit 10 ml Wasser hydrolysiert. Der Umsatzgrad wurde gaschromatographisch bestimmt. Die Ergebnisse sind der Tabelle 1 zu entnehmen.

**Tabelle 1**

| Versuch | Teilchengröße des eingesetzten Aluminiums | Reaktionszeit (Minuten) | Umsatz Triphenylphosphindichlorid |
|---|---|---|---|
| 1 | Pulver (< 85 µ) | 5 | 49 % |
| 2 | 100 - 200 µ ^{*)} | 5 | 98 % |
| 3 | 200 - 400 µ ^{*)} | 5 | 100 % |
| 4 | 400 - 600 µ ^{*)} | 5 | 100 % |
| 5 | Schrot (9 mm) | 5 | 52 % |
| | | 10 | 68 % |
| 6 | Hackdraht | 5 | 53 % |
| | | 10 | 83 % |

| | | | |
|---|---|---|---|
| *) nicht im beanspruchten Bereich | | | |

### Beispiele

Die Versuche wurden bei einer Temperatur von 50°C unter sonst gleichen Bedingungen wiederholt. Die Ergebnisse sind der Tabelle 2 zu entnehmen.

**Tabelle 2**

| Versuch | Teilchengröße des eingesetzten Aluminiums | Reaktionszeit (Minuten) | Umsatz Triphenylphosphindichlorid |
|---|---|---|---|
| 1 | Pulver (< 85 µ) | 10 | 53 % |
| 2 | 100 - 200 µ ^{*)} | 10 | 96 % |
| 3 | 400 - 600 µ ^{*)} | 10 | 100 % |
| 4 | Schrot (9 mm) | 10 | 50 % |
| 5 | Hackdraht | 10 | 61 % |

| | | | |
|---|---|---|---|
| *) nicht im beanspruchten Bereich | | | |

### Beschreibung für folgenden Vertragsstaat : BE

Die vorliegende Erfindung betrifft ein verbessertes Verfahren zur Herstellung von Triphenylphosphin (TPP) durch Reduktion von Triphenylphosphindichlorid (TPPCl₂) mit Aluminium.

TPP dient, wie allgemein bekannt ist, im technischen Maßstab nach der sogenannten Wittigschen Ylid-Synthese zur Herstellung olefinischer Verbindungen wie Vitamin A, wobei das in stöchiometrischer Menge eingesetzte TPP zum Triphenylphosphinoxid (TPPO) oxidiert wird.

Da für das TPPO nur wenige Anwendungen bekannt sind und da es als äußerst stabile Substanz nur schwer entsorgt werden kann, ist man bestrebt, es wieder in das TPP zu überführen.

Bei der aus der DE-B 11 92 205 (Spalte 1, Zeilen 1 bis 4) und der GB-B 10 29 924 (Seite 2, Zeilen 104 bis 110) bekannten Reaktionsfolge wird das TPPO mit Phosgen zu TPPCl₂ umgesetzt, welches anschließend mit Aluminium zum TPP reduziert wird.

Für die Reduktion des TPPCl₂ zum TPP ist es allgemein üblich, sehr feinteiliges Aluminiumpulver einzusetzen. So wird beispielsweise in der DE 12 59 883 empfohlen, Aluminiumpulver mit einer durchschnittlichen Teilchengröße von 50 bis 75 µm einzusetzen (Spalte 4, Zeilen 26 bis 31).

Auch in der GB-B 10 29 924 wird ein sehr feinteiliges Aluminiumpulver eingesetzt, da das Aluminiumpulver zuvor durch Klassierung mit einem sehr feinen Maschensieb erhalten wird (Seite 3, Zeilen 3 bis 8). Die hier zitierte "mesh sieve" von 200 bis 300 entspricht einer Teilchengröße von 76 bis 53 µm.

Die Bereitstellung von sehr feinteiligem Aluminiumpulver gestaltet sich jedoch relativ aufwendig und kostenintensiv, Weiterhin werden bei den beschriebenen Verfahren relativ langsame Umsetzungsgeschwindigkeiten erzielt.

Der Erfindung lag daher die Aufgabe zugrunde, den o.g. Nachteilen abzuhelfen und die Umsetzung von TPPCl₂ zu TPP wirtschaftlicher und einfacher zu gestalten als bisher.

Demgemäß wurde ein Verfahren zur Herstellung von TPP durch Reduktion von TPPCl₂ mit Aluminium gefunden, welches dadurch gekennzeichnet ist, daß man Aluminiumteilchen mit einem Teilchendurchmesser von 100 bis 2000 µm einsetzt.

Die Größe der Aluminiumteilchen spielt bei der Umsetzung von TPPCl₂ zu TPP eine entscheidende Rolle. Hierbei wurde überraschenderweise festgestellt, daß man bei Einsatz von Aluminiumteilchen mit einem Teilchendurchmesser von 100 bis 2000 µm, bevorzugt 100 bis 1000 µm, besonders bevorzugt 200 bis 600 µm, höhere Raum-Zeit-Ausbeuten erzielen kann als mit feinteiligem Aluminiumpulver von etwa 50 bis 75 µm.

Der Teilchendurchmesser entspricht bei kugelförmigen Teilchen dem Kugeldurchmesser. Bei hiervon abweichenden Formen gestaltet sich die Angabe der exakten Teilchengröße zwar etwas diffus, allerdings lassen sich auch in diesen Fällen Aluminiumteilchen der erfindungsgemäßen Teilchengröße durch Siebung bereitstellen.

Hierzu kann man in bekannter Weise durch Verwendung zweier Siebe in den Maschenweiten von 100 bzw. 2000 µm ein Teilchenkollektiv auswählen, welches die anspruchsgemäßen Erfordernisse erfüllt.

Falls man engere Teilchenkollektive auswählen will, kann man dies durch entsprechende Auswahl der Siebe erzielen.

Die Siebe sind handelsüblich erhältlich und die Maschenweite ist in der DIN-Norm 4188 festgelegt.

Die Reaktivität der Aluminiumteilchen durchläuft in dem erfindungsgemäßen Größenbereich ein Maximum an Reaktivität, d.h. mit weiter zunehmender Teilchengröße wird ebenfalls eine Abnahme der Reaktivität beobachtet.

Wesentlich für die erfindungsgemäße Steigerung der Raum-Zeit-Ausbeute ist die Größe der Aluminiumteilchen. Neben den besonders gut geeigneten kugelförmigen Aluminiumteilchen sind auch andere Formen wie Nadeln, Späne oder auch unregelmäßige Formen gut geeignet, sofern sie die erfindungsgemäße Teilchengröße besitzen.

Die Umsetzung von TPPCl₂ mit Aluminium zu TPP und Aluminiumchlorid kann sowohl kontinuierlich als auch diskontinuierlich durchgeführt werden.

Hierzu wird dem in einem inerten Lösungsmittel wie Toluol, Xylol, Chlorbenzol, Dichlorbenzol, Benzonitril, Acetonitril, Propionitril oder Cyclohexan gelösten TPPCl₂ das Reduktionsmittel Aluminium mit der erfindungsgemäßen Teilchengröße zugegeben.

Die Reaktionstemperatur erstreckt sich üblicherweise von etwa 20 bis 200°C, bevorzugt 60 bis 150°C, besonders bevorzugt 60 bis 120°C.

Die Reduktion kann sowohl bei Normaldruck als auch bei vermindertem oder erhöhtem Druck durchgeführt werden. Vorzugsweise arbeitet man bei Normaldruck.

Das Aluminium kann in stöchiometrischen Mengen eingesetzt werden. Da ein Überschuß die Reaktionsgeschwindigkeit erhöht, wird das Aluminium vorzugsweise in einem 2 bis 10 molaren Überschuß eingesetzt. Nicht umgesetztes Aluminium wird vorzugsweise nach Abtrennen des Reaktionsgemisches in die Reduktion zurückgeführt.

Als Reaktoren eignen sich die bekannten Bauformen wie beispielsweise Rührreaktoren.

Insbesondere bei einer kontinuierlichen Reduktion in einem Rührreaktor ist neben der Teilchengröße auch das Korngrößenverteilungsspektrum von Bedeutung. Die Differenz zwischen den größten und den kleinsten Aluminiumteilchen (Siebober- bzw. Siebuntergrenze) des eingesetzten Aluminiums sollte nicht mehr als 800 µm betragen. Vorzugsweise ist die Differenz geringer als 500 µm und ganz besonders bevorzugt ist eine Differenz von nicht mehr als 200 µm. Die angegebenen Partikelgrößen und Bandbreiten beziehen sich auf Standardsiebfraktionen mit den herstellungsbedingten Toleranzen bezüglich des Ober- bzw. Unterkornanteils.

Durch dieses Korngrößenverteilungsspektrum kann man die Aluminiumteilchen im Rührreaktor sehr homogen verteilen, wodurch die Reaktionsführung weiter begünstigt wird.

Nach beendeter Umsetzung wird die Reaktionslösung von dem ggf. überschüssigen Aluminium abgetrennt und anschließend in für metallorganische Reaktionen üblicher Weise vorzugsweise durch Hydrolyse und Destillation aufgearbeitet.

Das erfindungsgemäße Verfahren bietet hohe Ausbeuten an TPP bei hoher Raum-Zeit-Geschwindigkeit. Weiterhin konnte das Verfahren einfacher und wirtschaftlicher gestaltet werden.

### Beispiel 1 bis 6

Der Reaktionsverlauf wurde kinetisch verfolgt. In einem mit Stickstoff inertisierten Gefäß mit Magnetrührer und Rückflußkühler wurden 3 g Aluminium vorgelegt. Das Gefäß wurde in einem Ölbad auf 110°C erhitzt. Anschließend wurden 10 ml Triphenylphosphindichlorid gelöst in Chlorbenzol (Gehalt: 13 Gew.-%) auf einmal zugegeben. Die Reaktion sprang unter heftigem Schäumen an. Nach einer Reaktionszeit von 5 bzw. 10 Minuten wurde das Ölbad entfernt und das Reaktionsgemisch mit 10 ml Wasser hydrolysiert. Der Umsatzgrad wurde gaschromatographisch bestimmt. Die Ergebnisse sind der Tabelle 1 zu entnehmen.

**Tabelle 1**

| Versuch | Teilchengröße des eingesetzten Aluminiums | Reaktionszeit (Minuten) | Umsatz Triphenylphosphindichlorid |
|---|---|---|---|
| 1 | Pulver (< 85 µ) | 5 | 49 % |
| 2 | 100 - 200 µ | 5 | 98 % |
| 3 | 200 - 400 µ | 5 | 100 % |
| 4 | 400 - 600 µ | 5 | 100 % |
| 5 | Schrot (9 mm) | 5 10 | 52 % 68 % |
| 6 | Hackdraht | 5 10 | 53 % 83 % |

### Beispiele

Die Versuche wurden bei einer Temperatur von 50°C unter sonst gleichen Bedingungen wiederholt. Die Ergebnisse sind der Tabelle 2 zu entnehmen.

**Tabelle 2**

| Versuch | Teilchengröße des eingesetzten Aluminiums | Reaktionszeit (Minuten) | Umsatz Triphenylphosphindichlorid |
|---|---|---|---|
| 1 | Pulver (< 85 µ) | 10 | 53 % |
| 2 | 100 - 200 µ | 10 | 96 % |
| 3 | 400 - 600 µ | 10 | 100 % |
| 4 | Schrot (9 mm) | 10 | 50 % |
| 5 | Hackdraht | 10 | 61 % |

## Patentansprüche (Patentansprüche für folgende(n) Vertragsstaat(en): CH, LI, DE, ES, FR, GB, IT, NL)

1. Verfahren zur Herstellung von Triphenylphosphin (TPP) durch Reduktion von Triphenylphosphindichlorid (TPPCl₂) mit Aluminium, dadurch gekennzeichnet, daß man Aluminiumteilchen mit einem Teilchendurchmesser von 100 bis 2000 µm einsetzt, wobei Aluminiumteilchen mit einem Teilchendurchmesser von 200 bis 400 µm ausgeschlossen sind.

2. Verfahren nach Anspruch 1, dadurch gekennzeichnet, daß die Differenz der Siebobergrenze und Siebuntergrenze des eingesetzten Aluminiums nicht mehr als 800 µm beträgt.

## Patentansprüche (Patentansprüche für folgende(n) Vertragsstaat(en): BE)

1. Verfahren zur Herstellung von Triphenylphosphin (TPP) durch Reduktion von Triphenylphosphindichlorid (TPPCl₂) mit Aluminium, dadurch gekennzeichnet, daß man Aluminiumteilchen mit einem Teilchendurchmesser von 100 bis 2000 µm einsetzt.

2. Verfahren nach Anspruch 1, dadurch gekennzeichnet, daß die Differenz der Siebobergrenze und Siebuntergrenze des eingesetzten Aluminiums nicht mehr als 800 µm beträgt.

## Claims (Claims for the following Contracting State(s): CH, LI, DE, ES, FR, GB, IT, NL)

1. A process for preparing triphenylphosphine (TPP) by reduction of triphenylphosphine dichloride (TPPCl₂) with aluminum, in which use is made of aluminum particles having a particle diameter of from 100 to 2000 µm, with aluminum particles having a particle diameter of from 200 to 400 µm being excluded.

2. A process as claimed in claim 1, wherein the difference between the upper screening limit and the lower screening limit of the aluminum used is not more than 800 µm.

## Claims (Claims for the following Contracting State(s): BE)

1. A process for preparing triphenylphosphine (TPP) by reduction of triphenylphosphine dichloride (TPPCl₂) with aluminum, in which use is made of aluminum particles having a particle diameter of from 100 to 2000 µm.

2. A process as claimed in claim 1, wherein the difference between the upper screening limit and the lower screening limit of the aluminum used is not more than 800 µm.

## Revendications (Revendications pour l'(les) Etat(s) contractant(s) suivant(s): CH, LI, DE, ES, FR, GB, IT, NL)

1. Procédé de préparation de la triphénylphosphine (TPP) par réduction du dichlorure de triphénylphosphine (TPPCl₂) à l'aide de l'aluminium, caractérisé par le fait que l'on utilise des particules d'aluminium à un diamètre de 100 à 2000 µm mais exemptes de particules d'aluminium de diamètre de 200 à 400 µm.

2. Procédé selon la revendication 1, caractérisé par le fait que la différence entre la limite supérieure de tamisage et la limite inférieure de tamisage de l'aluminium mis en oeuvre ne dépasse pas 800 µm.

## Revendications (Revendications pour l'(les) Etat(s) contractant(s) suivant(s): BE)

1. Procédé de préparation de la triphénylphosphine (TPP) par réduction du dichlorure de triphénylphosphine (TPPCl₂) à l'aide de l'aluminium, caractérisé par le fait que l'on utilise des particules d'aluminium à un diamètre de 100 à 2000 µm.

2. Procédé selon la revendication 1, caractérisé par le fait que la différence entre la limite supérieure de tamisage et la limite inférieure de tamisage de l'aluminium mis en oeuvre ne dépasse pas 800 µm.
